# NEUE EUROPÄISCHE PATENTSCHRIFT

(11) **EP 0 719 577 B2**
(45) Veröffentlichungstag und Bekanntmachung des Hinweises auf die Entscheidung über den Einspruch: **02.01.2003**
(45) Hinweis auf die Patenterteilung: 22.09.1999
(21) Anmeldenummer: 95117641.1
(22) Anmeldetag: 09.11.1995
(51) Int. Cl.: B01D 46/04

(54) **Staubfilter**
Dust filter
Filtre à poussière

(30) Priorität: 08.12.1994 DE 4443632
(43) Veröffentlichungstag der Anmeldung: 03.07.1996
(73) Patentinhaber: Intensiv-Filter GmbH & Co KG, D-42555 Velbert - Langenberg (DE)
(72) Erfinder: Kordas, Friedel, Ing., D-45663 Recklinghausen (DE)
(74) Vertreter: Christophersen & Partner

(56) Entgegenhaltungen:
- EP-A- 0 134 297
- FR-A- 2 702 672

## Beschreibung

Die Erfindung betrifft ein Staubfilter nach dem Oberbegriff von Anspruch 1.

Es ist bekannt, daß gattungsgemäße Staubfilter in der Arbeitsphase mit einem Druckluft-Impuls-Injektorsystem in der Weise gereinigt werden, daß die an der Schlauchaußenseite anhaftenden Staub- oder Produktschichten durch Rückspülen abgeblasen werden.

Werden die Staubfilter jedoch an Produktionsanlagen eingesetzt, die mit wechselnden Produkten betrieben werden, so ist es erforderlich, den gesamten Staubluftraum dieser Filter einschließlich der Filterschläuche so von den beim Filtrierprozeß unvermeidlich an Filterschläuchen und Innenwänden anhaftenden Staub- oder Produktrückständen zu reinigen, daß bei einem Produktwechsel Produktverfälschungen oder Produktverunreinigungen vermieden werden.

Zur Reinigung von Staubfiltern ist es z.B. bereits bekannt, ringförmig verteilte Düsen, aus denen Waschflüssigkeit austritt, über den Filterschlauch in axialer Richtung zu bewegen, wodurch die Waschflüssigkeit in radialer Richtung auf die Oberfläche des Filterschlauches trifft. Bei anderen Staubfiltern werden die Filterschläuche mit geeigneten Einrichtungen, wie z.B. Druckluftzylindern, von ihrem Sitz abgehoben und in axialer Richtung an fest eingebauten Sprühdüsen vorübergezogen, wobei die Filterschläuche durch die radial gerichteten Flüssigkeitsstrahlen gereinigt werden.

Bei den vorgenannten, mit Waschsystemen versehenen Staubfiltern handelt es sich um kleinere Aggregate. Für große Staubfilteranlagen mit Gehäusedurchmessern bis zu 4,50 m, Filterschlauchlängen bis zu 4,50 m und Stückzahlen der eingebauten Filterschläuche bis zu 300 pro Staubfilter lassen sich die oben beschriebenen Waschsysteme aus Funktionsgründen und insbesondere aus Kostengründen nicht mehr einsetzen.

Aus der FR-A 2 702 672 sowie der DE 9400 913 U1 ist es bekannt, bei einem Staubfilter Wascheinrichtungen zwischen den Filterkerzen vorzusehen. Die Wascheinrichtung setzt sich aus Verteilern sowie unterhalb des Trennblechs des Filters angeordneten, langgestreckten Profilen zusammen, die sich zwischen den Reihen der Filterkerzen erstrecken. Die Ränder jedes Profils bilden Verengungen, durch welche die Waschflüssigkeit nach Art einer Düse austreten kann. Durch die Verwendung eines länglichen Profils für die Düse ist allerdings eine über den Umfang der Filterkerzen gleichmäßige Verteilung der Waschflüssigkeit nicht möglich. Vielmehr gelangt der überwiegende Anteil der über die Düsen abgegebenen Waschflüssigkeit auf ein relativ kleines Segment der jeweils nächstliegenden Filterkerze, wohingegen auf andere Umfangssegmente der Filterkerzen weniger Waschflüssigkeit gelangt.

Waschdüsen für ein Filter mit darin eingehängten Filterelementen sind zudem aus der EB 0 134 297 A2 bekannt. Ein Teil dieser Düsen befindet sich entlang des zylindrischen Innenmantels des Staubluftraumes, während weitere Düsen für den Austritt von Waschflüssigkeit über den Trennboden zum Reinluftraum gleichmäßig verteilt angeordnet sind, wobei die Düsenmündungen dieser weiteren Düsen im wesentlichen nach unten gerichtet sind. Die hieraus abgegebenen Wascnflüssigkeit gelangt daher nicht auf den oberen Teil der Filterelemente, vielmehr wird dieser obere Teil lediglich durch die seitlich in der zylindrischen Innenwandung des Filtergehäuses angeordneten Düsen erfaßt.

Der Erfindung liegt die **Aufgabe** zugrunde, ein auch für große Entstaubungsanlagen geeignetes Staubfilter zu schaffen, dessen Filterschläuche sich in betriebsfertigem Zustand des Staubfilters, d. h. ohne vorherige Umbauten oder Eingriffe in den konstruktiven Aufbau, über den Umfang der Fitterschläuche gleichmäßig von anhaftenden Stäuben oder Produktresten säubern lassen.

Zur **Lösung** dieser Aufgabe wird ein Staubfilter mit den Merkmalen des Anspruchs 1 vorgeschlagen.

Bei einem solchen Staubfilter gelangt der im wesentlichen radial aus der Austrittsöffnung austretende Waschmittelstrahl auf die umgebenden, nächstliegenden Filterschlauche, und zwar unmittelbar unterhalb des Trennbodens, in den die Filterschläuche eingehängt sind, und ferner über den Umfang der Filterschläuche gleichmäßig verteilt. Das auftreffende Waschmittel wird dabei nach unten umgelenkt, und strömt dann senkrecht entlang der gesamten Länge der schlauchförmigen Filterelemente nach unten. Dabei werden die über den Umfang der Außenwände der Filterelemente daran anhaftenden Staub- und Produktanlagerungen von der Waschflüssigkeit aufgelöst, und nach unten mitgerissen. Da jede Waschdüse so angeordnet ist, daß der austretende Waschmittelstrahl gleichzeitig alle nächstliegenden Filterschläuche bzw. Filterelemente erfaßt, wird jedes Filterelement gleichzeitig aus mehreren Waschdüsen gereinigt, wobei der Waschmittelstrahl jeder Waschdüse nur einen Teilsektor des Gesamtumfangs des jeweiligen Filterelementes erfaßt. Bei Berücksichtigung sämtlicher umliegender Waschdüsen ergibt sich jedoch stets eine Reinigung über den gesamten Umfang des Filterschlauches.

In diesem Zusammenhang ist der Begriff "Filterschlauch" gestalterisch, und nicht funktionell zu verstehen. Hierunter sind auch alle anderen Filterelemente mit einem langgestreckten, im Querschnitt runden oder eckigen Filterkörper zu verstehen, z.B. auch Filterkerzen.

Gemäß einer bevorzugten Weiterbildung des Staubfilters schließt die Austrittsöffnung der Waschdüse mit der Unterseite des Trennbodens bündig ab. Auf diese Weise strömt das aus der Austrittsdüse austretende Waschmittel entlang der Unterseite des Trennbodens, gelangt dann an den oberen Ansatz des Filterschlauches, und strömt dann nach einer Umlenkung um bis zu 90° senkrecht an dem Filterschlauch abwärts, so daß sich insgesamt eine besonders gründliche und über den Umfang gleichmäßige Reinigung der Filterschläuche einstellt.

Die Waschdüse ist mit einem unter Federdruck sich staubdicht schließenden und unter dem Druck der Waschflüssigkeit sich öffnenden Ventil versehen. Ein solches druckbetätigtes Ventil ist einfach aufgebaut, und benötigt keine Ansteuerungsmittel. Vielmehr wird der Druckaufbau in der Waschmittelzuleitung dazu genutzt, das Ventil während des Reinigungsvorganges geöffnet zu halten.

Eine besonders günstige Ausrichtung des aus der Austrittsöffnung austretenden Waschmittelstrahles wird erreicht, da sich die Austrittsöffnung an einem Verteilerteller befindet. Dieser Verteilerteller kann zugleich den Ventilkörper des Ventils der Waschdüse bilden, wobei sich die Ventildichtfläche an der Oberseite des Verteilertellers befindet.

Um mit Hilfe des Verteilertellers die Richtung, Form und/oder Intensität des Waschmittelstrahles beeinflussen zu können, kann der Verteilerteller mit Profilierungen versehen sein. Ferner kann der Verteilerteller mit strahllenkenden Mitteln versehen sein, um z.B. den Waschmittelstrahl nur in bestimmte Richtungen oder Sektoren zu lenken. Auf diese Weise läßt sich vermeiden, daß ein Teil des austretenden Waschmittels nicht auf den nächstliegenden Filterschlauch, sondern in den Zwischenraum zwischen benachbarten Filterschläuchen trifft.

Gemäß einer konstruktiven Ausgestaltung ist die Waschdüse mit einer Gewindeschraubverbindung in Öffnungen des Trennbodens befestigt. Zur Durchführung von Wartungs- oder Reparaturarbeiten läßt sich die Waschdüse dort relativ einfach aus- und wieder einbauen.

Um den-Anschluß der einzelnen Waschdüsen an eine gemeinsame Waschflüssigkeitsversorgung zu vereinfachen, können mehrere Waschdüsen über Steckverbindungen mit abdichtenden O-Ringen an eine gemeinsame Waschflüssigkeitszuleitung angeschlossen sein.

Gemäß einer vorteilhaften Weiterbildung des Staubfilters sind die Filterschläuche an ihrem unteren Ende mit einem nach außen gewölbten Filterboden versehen Die Wölbung des Filterbodens führt dazu, daß die an den Filterschläuchen herabfließende Waschflüssigkeit auch über die Oberfläche des Filterbodens geführt wird, bevor die so mit Staubpartikeln angereicherte Waschflüssigkeit in eine darunter angeordnete Auffangwanne gelangt.

Schließlich ist eine Ausgestaltung des Staubfilters gekennzeichnet durch Mittel zum Ausblasen der Waschdüsen und Zuleitungen mit Druckluft oder mit anderen Gasen. Hierdurch wird Restflüssigkeit entfernt und so ein Nachtropfen und damit ein Anbacken von Stäuben oder Produkten während des nachfolgenden Filtrierprozesses vermieden.

Weitere Einzelheiten eines erfindungsgemäßen Staubfilters werden nachfolgend anhand der Zeichnung erläutert. Darin zeigen:
- Fig. 1: einen Teilschnitt durch ein Staubfilter,
- Fig. 2: in einer Detaildarstellung zu Fig. 1 eine oberhalb des Zwischenraumes zwischen mehreren Filterschläuchen angeordnete Waschdüse und
- Fig. 3: eine Schnittansicht entsprechend der in Fig. 1 eingetragenen Schnittebene III-III.

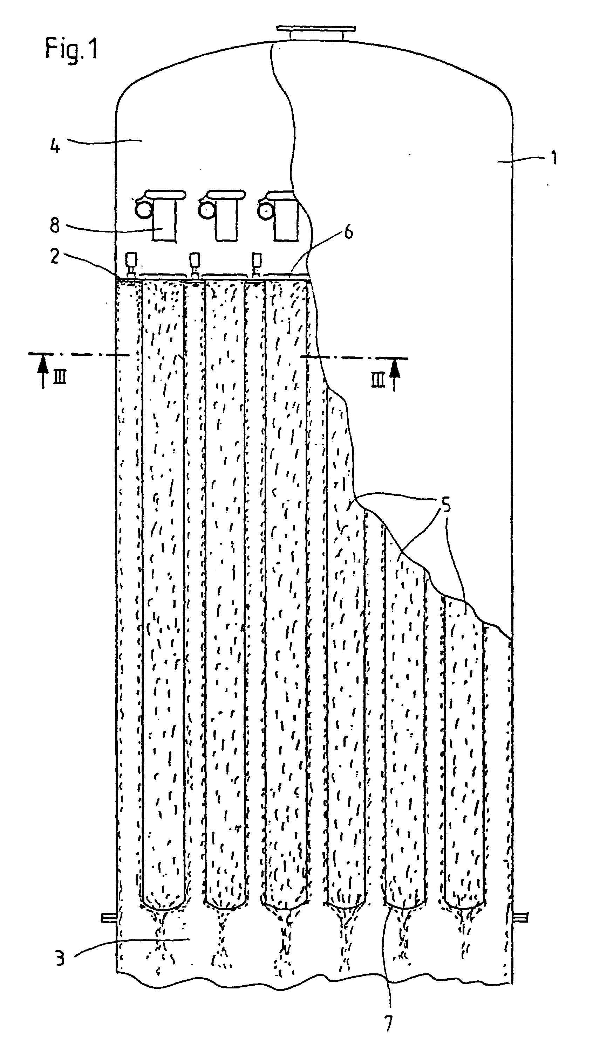

Das in Fig. 1 in Gesamtansicht dargestellte Staubfilter besteht aus einem vertikal ausgerichteten, zylindrischen Filtergehäuse 1, welches durch einen horizontal liegenden Trennboden 2 in einen untenliegenden Staubluftraum 3 und einen obenliegenden Reinluftraum 4 unterteilt ist. Der Trennboden 2 ist ähnlich einem Rohrboden gestaltet, verfügt also über eine Vielzahl gleichmäßig über die Fläche des Trennbodens 2 verteilter Öffnungen mit darin eingesetzten, langgestreckten Filterelementen. Die Filterelemente können Filterkerzen oder Filterschläuche 5 sein, die an ihrem oberen Ende jeweils mit einem ringförmigen Flansch 6 verbunden sind. Die Filterschläuche 5 sind unter ihrem Eigengewicht in die Öffnungen des Trennbodens 2 eingehängt, wobei sie sich mittels der Flansche 6 auf der Oberseite des Trennbodens 2 abstützen. Die wirksame Filterfläche wird durch die Mantelfläche der beim Ausführungsbeispiel zylindrischen Filterschläuche 5, sowie durch deren die Filterschläuche 5 nach unten abschlieβendem Boden 7 gebildet. Der Boden 7 ist, wie Fig. 1 erkennen läßt, in Gestalt einer nach unten gerichteten Wölbung geformt.

Oberhalb jedes Filterschlauches 5 und Ausrichtung dazu ist jeweils eine Druckluftquelle 8 eines Druckluft-Impuls-Injektorsystems angeordnet, die für die Abreinigung der Filterschläuche von dem ausfiltrierten Staub oder Produkt wahrend des Filtrierprozesses erforderlich ist.

Staubhaltige Luft strömt von unten in das Filtergehäuse 1, wobei sich die fein verteilten Stäube an den Außenflächen der Filterschläuche 5 absetzen. Die so gereinigte Luft gelangt in den Innenraum der Filterschläuche 5, und von dort durch die obere, freie Öffnung in den Reinluftraum 4.

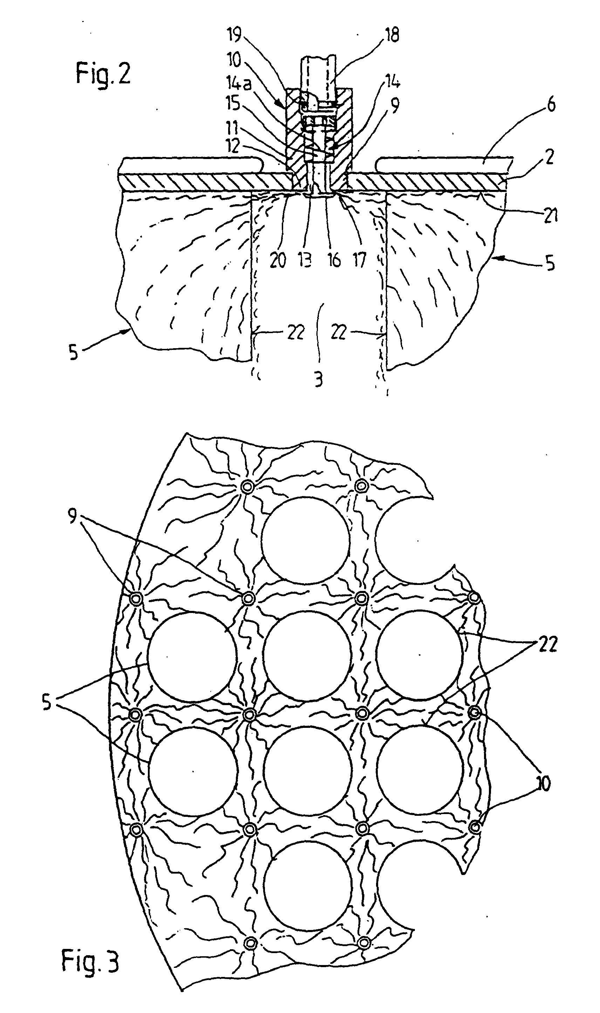

Neben den Öffnungen für die Filterschläuche 5 verfügt der Trennboden 2 noch über weitere Öffnungen 9, in die Waschdüsen 10 eingesetzt sind. Fig. 3 läßt erkennen, daß sich die Öffnungen 9 für die Waschdüsen 10 in den Kreuzungsmittelpunkten von jeweils vier benachbarten Filterschläuchen 5 befinden.

Den Aufbau und die Wirkungsweise der Waschdüsen 10 wird nun anhand der Fig. 2 erläutert. Jede Waschdüse 10 besteht aus einem zylindrischen Düsengehäuse 11, welches mit einem Absatz 12 in die Öffnung 9 des Trennbodens 2 eingesetzt ist. Hierbei schließt die Unterseite des Düsengehäuses 11 bündig mit der Unterseite des Trennbodens 2 ab. Das Düsengehäuse 11 ist mit einer zentralen Durchgangsbohrung 13 versehen, die durch einen Ventilkörper 14 verschließbar ist. Der Ventilkörper 14 besteht aus einem die Durchgangsbohrung 13 mit Spiel durchragenden Stößel 15, sowie aus einem am unteren Ende des Stößels 15 befestigten Verteilerteller 16. Der Durchmesser des Verteilertellers 16 ist größer als der Mündungsdurchmesser der Durchgangsbohrung 13. Bei unbetätigtem Ventil ist eine Druckfeder 14a bestrebt, den Stößel 15 nach oben zu schieben, wodurch sich die Oberseite des Verteilertellers 16 gegen die Unterseite des Düsengehäuses 11 legt, und das Ventil staubdicht schließt. Übersteigt der Druck im Inneren des Düsengehäuses 11 den Schließdruck der Druckfeder 14a, so bewegt sich der aus Stößel 15 und Verteilerteller 16 bestehende Ventilkörper 14 nach unten, so daß oberhalb des Verteilertellers 16 eine ringförmige Austrittsöffnung 17 frei wird.

Die Waschdüse 10 ist über eine Steckverbindung 18 mit einem abdichtenden O-Ring 19 an eine mehreren Waschdüsen gemeinsame Waschflüssigkeitszuleitung angeschlossen. Über die Waschflüssigkeitszuleitung steht stets Waschflüssigkeit im Inneren des Düsengehäuses 11 zur Verfügung. Übersteigt diese einen bestimmten Druckwert, öffnet das Ventil, und Waschflüssigkeit kann in Gestalt eines allseitig radial austretenden Waschmittelstrahls 20 aus der Austrittsöffnung 17 austreten.

Der Waschmittelstrahl 20 strömt horizontal entlang der Unterseite 21 des Trennbodens 2, bis er unmittelbar unterhalb des Trennbodens 2 auf die Außenfläche 22 des jeweils nächstliegenden Filterschlauches 5 trifft. Das Waschmittel wird dann umgelenkt, und strömt entsprechend der Schwerkraft entlang der Außenfläche 22 der Filterschläuche 5 nach unten. Dabei werden die Staub- oder Produktanlagerungen an der Außenfläche 22 der Filterschläuche 5 von der Waschflüssigkeit aufgelöst, und mit herabgeschwemmt. Die Waschmittelströmung reißt am Ende der Filterschläuche 5 nicht ab, sondern überströmt zunächst noch die gewölbten Böden 7 der Filterschläuche 5, wie dies in Fig. 1 dargestellt ist.

Um eine günstige Verteilung des Waschmittelstrahls 20 zu erreichen, ist die Oberseite des Verteilertellers 16 mit einer geeigneten Profilierung versehen, um so die Richtung, Form und/oder Intensität des Waschmittelstrahles 20 zu beeinflussen.

Ein Waschvorgang wird stets vor einem Produktwechsel durchgeführt, um zu vermeiden, daß das nachfolgende Produkt durch Staub- oder Produktrückstände aus der vorangegangenen Entstaubung verunreinigt wird. Als Waschflüssigkeit kann Wasser mit entsprechenden Zusätzen, wie reinigungsfördernde Mittel, Säuren zur Keimabtötung, Laugen zur Neutralisierung verwendet werden.

Bei einem üblichen Waschvorgang wird zunächst mit Umlaufwasser vorgewaschen, und mit Reinwasser fertig gewaschen. Es schließt sich dann ein Hygiene-Waschvorgang mit verdünnter Säure oder verdünnter Lauge an, falls erforderlich. Anschließend wird nochmals mit Reinwasser gespült, bevor dann mit Hilfe der Beaufschlagung durch Druckluft (oder einem anderen Druckgas) die Restflüssigkeit aus den Waschmittelzuführungsleitungen und den Waschdüsen 10 ausgeblasen wird. Schließlich werden die Innenteile des Staubfilters mit durchströmender Warmluft getrocknet.

### Bezugszeichenliste

- 1: Filtergehäuse
- 2: Trennboden
- 3: Staubluftraum
- 4: Reinluftraum
- 5: Filterschlauch
- 6: Flansch
- 7: Boden
- 8: Druckluftquelle
- 9: Öffnung
- 10: Waschdüse
- 11: Düsengehäuse
- 12: Absatz
- 13: Durchgangsbohrung
- 14: Ventilkörper
- 14a: Druckfeder
- 15: Stößel
- 16: Verteilerteller
- 17: Austrittsöffnung
- 18: Steckverbindung
- 19: O-Ring
- 20: Waschmittelstrahl
- 21: Unterseite Trennboden
- 22: Außenfläche der Filterschläuche

## Patentansprüche

1. Staubfilter mit einem vertikal ausgerichteten Filtergehäuse (1) und einem das Filtergehäuse (1) in einen untenliegenden Staubluftraum (3) und einen obenliegenden Reinluftraum (4) unterteilenden Trennboden (2), der mit einer Vielzahl vorzugsweise gleichmäßig über die Fläche des Trennbodens (2) verteilter Öffnungen versehen ist, in die nach oben zu dem Reinluftraum (4) hin offene Filterschläuche (5) unter ihrem Eigengewicht eingehängt sind, wobei zur Abgabe von Waschflüssigkeit zwecks Reinigung der Filterschläuche (5) von an deren Außenflächen (22) haftenden Staub- und Produktpartikeln Waschdüsen (10) an jenen Stellen in dem Staubluftraum angeordnet sind, die den jeweils Kürzesten Abstand zu den nächstliegenden Filterschläuchen (5) aufweisen,
und der Waschmittelstrahl unmittelbar unterhalb des Trennbodens (2) aus der Austrittsöffnung (17) der Waschdüsen (10) austritt und auf die Außenfläche (22) der nächstliegenden Filterschläuche (5) trifft,
**dadurch gekennzeichnet,**
**daß** die Austrittsöffnung (17) so gesteltet ist,
**daß** der Waschmittelstrahl (20) allseitig radial aus der Austrittsöffnung (17) austritt,
**daß** die Waschdüse (10) mit einem unter Federdruck sich schließenden und unter dem Druck der Waschflüssigkeit sich öffnenden Ventil versehen ist und
**daß** sich die Austrittsöffnung (17) an einem Verteilerteller (16) befindet.

2. Staubfilter nach Anspruch 1, **dadurch gekennzeichnet, daß** die Austrittsöffnung (17) der Waschdüse (10) mit der Unterseite (21) des Trennbodens (2) bündig abschließt.

3. Staubfilter nach Anspruch 1, **dadurch gekennzeichnet, daß** der Verteilerteller (16) zugleich den Ventilkörper (14) des Ventils der Waschdüse (10) bildet, wobei sich die Ventildichtfläche an der Oberseite des Verteilertellers (16) befindet.

4. Staubfilter nach Anspruch 1 oder Anspruch 3, **dadurch gekennzeichnet, daß** der Verteilerteller (16) mit Profilierungen versehen ist, die die Richtung, Form und/oder Intensität des Waschmittelstrahles beeinflussen.

5. Staubfilter nach einem der vorangehenden Ansprüche, **dadurch gekennzeichnet, daß** die Waschdüsen (10) mit einer Gewindeschraubverbindung in Öffnungen (9) des Trennbodens (2) befestigt sind.

6. Staubfilter nach einem der vorangehenden Ansprüche, **dadurch gekennzeichnet, daß** mehrere Waschdüsen (10) über Steckverbindungen (18) mit abdichtenden O-Ringen (19) an eine gemeinsame Waschflüssigkeitszuleitung angeschlossen sind.

7. Staubfilter nach einem der vorangehenden Ansprüche, **dadurch gekennzeichnet, daß** die Filterschläuche (5) an ihrem unteren Ende mit einem nach außen gewölbten Filterboden (7) versehen sind.

8. Staubfilter nach einem der vorangehenden Ansprüche, **gekennzeichnet durch** Mittel zum Ausblasen der Waschdüsen (10) und Zuleitungen mit Druckluft oder mit anderen Gasen.

## Claims

1. Dust filter with a vertically oriented filter housing (1) and with a separating floor (2) which subdivides the filter housing (1) into a lower dusty-air space (3) and an upper clean-air space (4) and which is provided with a multiplicity of orifices which are distributed preferably uniformly over the area of the separating floor (2) and in which filter tubes (5) open upwards towards the clean-air space (4) are suspended under their own weight, washing nozzles (10) for dispensing washing fluid for the purpose of cleaning the filter tubes (5) of dust and product particles adhering to their outer surfaces (22) being arranged at those points in the dusty-air space which are in each case at the shortest distance from the nearest filter tubes (5), and the washing-agent jet emerging from the outlet orifice (17) of the washing nozzles (10) directly below the separating floor (2), and impinging onto the outer surface (22) of the nearest filter tubes (5), **characterized in that** the outlet orifice (17) is designed in such a way that the washing-agent jet (20) emerges all-round radially from the outlet orifice (17), **in that** the washing nozzle (10) is provided with a valve closing under spring pressure and opening under the pressure of the washing fluid, and **in that** the outlet orifice (17) is located on a distributor plate (16).

2. Dust filter according to Claim 1, **characterized in that** the outlet orifice (17) of the washing nozzle (10) terminates flush with the underside (21) of the separating floor (2).

3. Dust filter according to Claim 1, **characterized in that** the distributor plate (16) at the same time forms the valve body (14) of the valve of the washing nozzle (10), the valve sealing surface being located on the top side of the distributor plate (16).

4. Dust filter according to Claim 1 or Claim 3, **characterized in that** the distributor plate (16) is provided with profiles which influence the direction, shape and/or intensity of the washing-agent jet.

5. Dust filter according to one of the preceding claims, **characterized in that** the washing nozzles (10) are fastened in orifices (9) of the separating flaw (2) by means of a threaded screw connection.

6. Dust filter according to one of the preceding claims, **characterized in that** a plurality of washing nozzles (10) are connected to a common washing-fluid feedline via plug connections (18) having sealing-off O-rings (19).

7. Dust filter according to one of the preceding claims, **characterized in that** the filter tubes (5) are provided at their lower end with an outwardly curved filter bottom (7).

8. Dust filter according to one of the preceding claims, **characterized by** means for blowing out the washing nozzles (10) and feedlines with compressed air or with other gases.

## Revendications

1. Filtre à poussière comprenant un boîtier de filtre (1) orienté verticalement et un fond de séparation (2) qui divise le boîtier de filtre (1) en un espace d'air poussiéreux (3) situé en bas et en un espace d'air pur (4) situé en haut et qui est pourvu d'une pluralité d'orifices qui sont répartis de préférence uniformément sur la surface du fond de séparation (2) et dans lesquels sont suspendues, sous l'action de leur propre poids, des gaines filtrantes (5) ouvertes vers le haut en direction de l'espace d'air pur (4), pour fournir du liquide de lavage afin de débarrasser les gaines filtrantes (5) de particules de poussière et de produit qui adhèrent à leurs surfaces extérieures (22), des buses de lavage (10) étant disposées aux endroits de l'espace d'air poussiéreux présentant le plus petit écartement avec les gaines filtrantes les plus proches (5), et le jet d'agent de lavage (20) sortant de l'orifice de sortie (17) des buses de lavage (10) juste au-dessous du fond de séparation (2) et frappe la surface extérieure (22) des gaines filtrantes les plus proches (5), **caractérisé en ce que** l'orifice de sortie (17) est conçu pour que le jet d'agent de lavage (20) sorte de l'orifice de sortie (17) de toutes parts radialement, **en ce que** la buse de lavage (10) est munie d'une valve qui se ferme sous une pression élastique et qui s'ouvre sous la pression du liquide de lavage, et **en ce que** l'orifice de sortie (17) se trouve au niveau d'un plateau de répartition (16).

2. Filtre à poussière selon la revendication 1, **caractérisé en ce que** l'orifice de sortie (17) de la buse de lavage (10) est jointif avec le dessous (21) du fond de séparation (2).

3. Filtre à poussière selon la revendication 1, **caractérisé en ce que** le plateau de répartition (16) forme simultanément le corps de valve (14) de la valve de la buse de lavage (10), la surface d'étanchéité de la valve se trouvant sur le dessus du plateau de répartition (16).

4. Filtre à poussière selon la revendication 1 ou la revendication 3, **caractérisé en ce que** le plateau de répartition (16) est pourvu de profilages qui influent sur la direction, sur la forme et/ou sur l'intensité du jet d'agent de lavage.

5. Filtre à poussière selon une des revendications précédentes, **caractérisé en ce que** les buses de lavage (10) sont fixées dans des orifices (9) du fond de séparation (2) à l'aide d'une liaison à vis.

6. Filtre à poussière selon une des revendications précédentes, **caractérisé en ce que** plusieurs buses de lavage (10) sont reliées à une conduite commune d'alimentation en liquide de lavage par des liaisons enfichables (18) à joints d'étanchéité toriques (19).

7. Filtre à poussière selon une des revendications précédentes, **caractérisé en ce que** les gaines filtrantes (5) sont pourvues, à leur extrémité inférieure, d'un fond filtrant (7) bombé vers l'extérieur.

8. Filtre à poussière selon une des revendications précédentes, **caractérisé par** des moyens pour purger les buses de lavage (10) et les conduites d'alimentation avec de l'air comprimé ou avec d'autres gaz.
